# EUROPÄISCHE PATENTANMELDUNG

(11) **EP 0 909 959 A2**
(43) Veröffentlichungstag der Anmeldung: **21.04.1999**
(21) Anmeldenummer: 98119475.6
(22) Anmeldetag: 15.10.1998
(51) Int. Cl.: G01S 13/93

(54) **Vorrichtung zur Sicherung des Rückraumbereiches oder eines Seitenbereiches eines Kraftfahrzeuges**

(30) Priorität: 15.10.1997 DE 19745493
(71) Anmelder: Schübler Fahrzeugtechnik GmbH, 46149 Oberhausen (DE)
(72) Erfinder: Schübler, Hans-Hubert, 45479 Mülheim/Ruhr (DE)
(74) Vertreter: Rox, Thomas Dr.

(57) **Zusammenfassung**

Die Erfindung betrifft einen Vorrichtung zum Überwachen des Rückraum- oder eines Seitenbereiches eines Kraftfahrzeug mit einem Näherungssensor und einer Steuerung. Der Näherungssensor umfaßt ein Mikrowellenmodul (8) sowie ein den Nahbereich des Näherungssensors überwachendes Optomodul (10), wobei eine Steuervorrichtung (12) zur Auswertung der vom Mikrowellenmodul (8) und vom Optomodul (10) erzeugten Ausgangssignals erzeugten Ausgangssignale vorgesehen ist. Bei dem Verfahren zur Personenerkennung wird ein Differenzsignal aus dem ausgestrahlten und dem reflektierenden Mikrowellensignal erzeugt, einzelne Perioden des Differenzsignals werden bestimmt und eine unregelmäßige Bewegung wird festgestellt, wenn der Betrag der Differenz zweier Perioden einen vorgegebenen Wert überschreitet. Des weiteren betrifft die Erfindung einen Näherungssensor, bei dem ein Teil der abgestrahlten Mikrowellenenstrahlung direkt übertragen wird und mit dem reflektierten Mikrowellenanteil vermischt und auf das Vorhandensein einer Person oder einer Manipulation analysiert wird.

## Beschreibung

Die Erfindung betrifft eine Vorrichtung zur Sicherung des Rückraumbereiches oder eines Seitenbereiches eines Kraftfahrzeuges, bei dem ein Näherungssensor verwendet wird.

Im Stand der Technik sind allgemein eine Vielzahl von Näherungssensoren bekannt, die optische Reflexionssignale erfassen, die an Personen oder Gegenständen reflektiert werden. Dabei wird jeweils ein optisches Signal entweder kontinuierlich oder intensitätsmoduliert ausgestrahlt und das empfangene, reflektierte Signal auf seine Intensität überwacht. Weiterhin sind Mikrowellensensoren bekannt, bei denen Mikrowellenstrahlung ausgesendet wird und die reflektierte Mikrowellenstrahlung vom Mikrowellensensor wieder empfangen wird, wobei die reflektierte Mikrowellenstrahlung sowohl hinsichtlich der Intensität bezogen auf einen Schwellenwert als auch hinsichtlich einer Frequenzverschiebung analysiert wird. Wird nämlich die ausgestrahlte Mikrowellenleistung an einem ortsfesten Ziel reflektiert, so weist diese rückgestrahlte Mikrowellenstrahlung eine unveränderte Frequenz gegenüber dem ausgestrahlten Mikrowellensignal auf. Bewegt sich jedoch die reflektierende Oberfläche entlang der Ausbreitungsrichtung der Mikrowellenstrahlung, so kommt es zu einer als Dopplerverschiebung bekannten Frequenzverschiebung der rückgestrahlten Mikrowellenleistung. Der Betrag dieser Frequenzverschiebung ist dabei direkt proportional der Geschwindigkeit der bewegten Oberfläche. Das ausgesendete Signal sowie das empfangene reflektierte Signal können mit Hilfe eines Mischelementes zu einem Differenzsignal verarbeitet werden. Somit steht dann das Differenzsignal für die weitere Auswertung der Bewegung der Oberfläche zur Verfügung.

Ein Anwendungsbeispiel für derartige Näherungssensoren betrifft Vorrichtungen zur Sicherung des Rückraumbereiches eines Kraftfahrzeuges, wie sie beispielsweise aus der DE 39 18 998 A bekannt ist. Bei derartigen Vorrichtungen wird zur Überwachung von zumindest Teilen des Rückraumbereiches eines Kraftfahrzeuges ein optischer Näherungssensor verwendet, der Infrarotstrahlung aussendet und empfängt. Liegt nun die Intensität der reflektierten Infrarotstrahlung oberhalb eines vorgegebenen Schwellenwertes, so wird mit Hilfe einer Steuervorrichtung die Betriebsweise der Kraftfahrzeuges beeinflußt, so daß eine sich im Erfassungsbereich der Sensoren aufhaltende Person wirksam vor einem Unfall geschützt wird. Dazu wird beispielsweise beim Nachweis einer Person ein Motorstop ausgelöst, wenn sich das Fahrzeug rückwärts bewegt, oder es wird eine Geschwindigkeitsbegrenzung aktiviert, so daß eine Vorwärtsfahrt nur mit einer vorgegebenen Maximalgeschwindigkeit möglich ist. Letzteres ist insbesondere bei Müllsammel-Fahrzeugen erforderlich, da Bedienpersonen auf den bekanntermaßen an der hinteren Seite angeordneten Trittbrettern auch während der Fahrt stehen können. Um die Sicherheit dieser Bedienpersonen zu erhöhen, sind die zuvor beschriebenen und auch weitere aus dem Stand der Technik bekannte Beeinflussungen der Betriebsweise des Kraftfahrzeuges erforderlich. Selbstverständlich ist eine derartige Vorrichtung zur Sicherung des Rückraumbereiches nicht auf Müllsammel-Fahrzeuge beschränkt, sondern die Vorrichtung kann bei jeglicher Art von Kraftfahrzeugen eingesetzt werden, bei denen es auf eine besondere Absicherung des hinteren Rückraumbereiches des Kraftfahrzeuges ankommt. Daher ist die genannte Vorrichtung auch zur Sicherung des Rückraumbereiches beispielsweise von Off-Road- und Baufahrzeugen, Lastkraftwagen jeder Art sowie Gabelstaplern geeignet.

Die aus dem Stand der Technik bekannten optischen Sensoren weisen insbesondere bei der zuvor beschriebenen Verwendung den Nachteil auf, daß sie in hohem Maße wegen der rauhen Umgebungsbedingungen störanfällig sind. So stellt es beispielsweise ein Problem dar, daß sich auf der Optik eines optischen Sensors Staub ablagert oder bei Regen die Oberfläche mit Wassertropfen versehen ist. Diese Verunreinigungen der Oberfläche der Optik führen zu einer Beeinflussung der Zuverlässigkeit bei der Auswertung des reflektierten Signales hinsichtlich eines Schwellenwertes. Da diese Sensoren meistens auf eine hohe Sensibilität eingestellt sind, ergeben sich aufgrund der Verunreinigungen häufig auftretende Fehler bei der Benutzung eines derartigen Sensors.

Weiterhin besteht ein Nachteil bei den bekannten Sensoren, daß neben den zu überwachenden Personen auch andere Gegenstände, die sich im Rückraumbereich befinden oder auch nur neben dem Fahrzeug angeordnet sind, wie beispielsweise eine Hauswand, ebenfalls zu einem Nachweissignal führen. Dadurch wird der Einsatzbereich der Sensoren und der damit verbundenen Vorrichtungen zur Sicherung des Rückraumbereiches eines Kraftfahrzeuges stark beeinträchtigt. Da lediglich die Intensität der reflektierten Signale bei den optischen Sensoren ausgewertet wird, ist eine Unterscheidung zwischen Personen und anderen Gegenständen nicht möglich.

Ein weiterer Nachteil bei den aus dem Stand der Technik bekannten Sensoren besteht darin, daß die Sensoren in ihrer Funktionstüchtigkeit eingeschränkt werden können, indem das Gehäuse oder die unmittelbare Umgebung der Sensoren manipuliert wird. Dadurch ist es möglich, daß der Sensor so weit außer Funktion gesetzt wird, daß eine Person, die eigentlich überwacht werden soll, vom Sensor nicht erfaßt wird und dementsprechend auch das Kraftfahrzeug nicht in seiner Betriebsweise beeinflußt wird. Diese Manipulationen bestehen beispielsweise bei optischen Sensoren darin, daß die Optik mit geeigneten Materialien abgedeckt oder abgeklebt werden, so daß das ausgesendete optische Signal nur in geringem Maße reflektiert wird und somit das empfangene Signal nicht oberhalb einer vorgegebenen Schwelle liegt.

Mikrowellensensoren dagegen lassen sich durch die Anbringung von metallischen Oberflächen in der Nähe des Sensorgehäuses so weit beeinflussen, daß die ausgesendete Mikrowellenstrahlung nur noch einen geringen Raumbereich einnimmt oder ganz abgeblockt wird. Da jedoch Mikrowellensensoren nicht die Intensität des reflektierten Signals allein, sondern immer auch die Dopplerverschiebung des reflektierten Signals auswerten, um eine Bewegung feststellen zu können, führen fest mit dem Mikrowellensensor verbundene Gegenstände, mit denen die Manipulation durchgeführt werden soll, zu einem Signal ohne eine Frequenzverschiebung. Daher wird der so manipulierte Mikrowellensensor keine Bewegung erkennen können, so daß eine sich an den Mikrowellensensor annähernde Person nicht erfaßt werden kann.

Der Erfindung liegt daher das technische Problem zugrunde, die aus dem Stand der Technik bekannten Näherungssensoren und somit die aus dem Stand der Technik bekannte Vorrichtung zur Sicherung des Rückraumbereiches oder eines Seitenbereiches eines Kraftfahrzeuges derart auszugestalten und weiterzubilden, daß die zuvor genannten Nachteile aufgehoben werden.

Dieses zuvor aufgezeigte technische Problem wird zunächst durch eine Vorrichtung zur Sicherung des Rückraumbereiches eines Kraftfahrzeuges mit den Merkmalen des Anspruches 1 gelöst.

Bei dieser Vorrichtung wird mindestens ein Näherungssensor verwendet, der zumindest teilweise den hinter dem Kraftfahrzeug angeordneten Rückraumbereich erfaßt. Die Vorrichtung weist darüber hinaus eine Steuerung auf, die über eine elektrische Leitung mit dem Näherungssensor verbunden ist und die mindestens ein Schaltmittel aufweist, das bei Vorliegen eines Ausgangssignals des Näherungssensors zur Beeinflussung einer Betriebsfunktion des Kraftfahrzeuges schaltet.

Wenn die Bewegung einer Person oder eine Manipulation des Näherungssensors nachgewiesen wird, ist es erforderlich, eine Betriebsfunktion des Kraftfahrzeuges derart zu beeinflussen, daß die Sicherheit von sich im Rückraumbereich des Kraftfahrzeuges befindenden Personen gewährleistet ist. Beispiele für derartige Beeinflussungen einer Betriebsfunktion des Kraftfahrzeuges sind die Aktivierung einer Geschwindigkeitsbegrenzung des Kraftfahrzeuges oder die Blokierung einer Zubehörhydraulik oder -mechanik. Weist die Steuerung darüber hinaus ein zweites Schaltmittel auf, das bei eingelegtem Rückwärtsgang schaltet, also den Zustand des Kraftfahrzeuges signalisiert, bei dem die sich hinter dem Kraftfahrzeug befindende Personen besonders gefährdet sind, so kann beispielsweise ein Motorstop aktiviert werden, wodurch das Kraftfahrzeug unmittelbar zum Stehen kommt. Weiterhin ist es möglich, eine Bremse des Kraftfahrzeuges zu aktivieren und/oder das Getriebe des Kraftfahrzeuges in die Leerlaufstellung zu schalten. In jedem Fall wird die sich hinter dem Kraftfahrzeug befindende Person wirksam vor einem Unfall geschützt.

Erfindungsgemäß ist weiter erkannt worden, daß eine Manipulation des Näherungssensors nur dann Sinn macht, wenn sie unmittelbar in der Nähe des Näherungssensors durchgeführt wird. Daher weist erfindungsgemäß der Näherungssensor neben einem Mikrowellenmodul ein Optomodul auf, das einen Sender und einen Empfänger für optische Strahlung aufweist. Somit ist es möglich, die unmittelbare Umgebung des Näherungssensors, der im wesentlichen auf einer auf Mikrowellen basierenden Betriebsweise beruht, optisch überwacht wird. Die im Näherungssensor vorgesehene Steuervorrichtung wertet dann nicht nur das von der Mikrowellenantenne erzeugte Ausgangssignal, sondern auch das vom Optomodul erzeugte Ausgangssignal aus. Weist also das Optomodul einen reflektierenden Gegenstand in der Nähe des Näherungssensors nach, so wird eine Manipulation des Näherungssensors unterstellt und ein entsprechendes Ausgangssignal erzeugt.

In bevorzugter Weise überwacht also das Optomodul lediglich den Nahbereich des Näherungssensors, der einen Bereich von beispielsweise bis zu 20 cm Entfernung umfaßt. Weiterhin vorzugsweise sendet der optische Sender des Optomoduls Infrarotlicht aus, das in weiter bevorzugter Weise mit einer Pulsmodulation versehen ist. In dieser Weise ist es bekanntermaßen möglich, Hintergrundstrahlung auf ein Minimum zu reduzieren und eine zuverlässige Überwachung des Nahbereiches des Näherungssensors zu ermöglichen.

Der Näherungssensor ist weiterhin in bevorzugter Weise für die Durchführung des weiter unten beschriebenen erfindungsgemäßen Verfahrens zur Personenerkennung ausgestaltet, wobei die Auswertung des reflektierten Mikrowellensignals den Nachweis lediglich einer typischen unregelmäßigen Bewegung einer Person ermöglicht, wobei lineare Bewegungen von sich relativ zum Kraftfahrzeug bewegten Gegenständen unterdrückt werden.

Der grundlegende Vorteil des erfindungsgemäßen Näherungssensors liegt darin, daß er aufgrund der Verwendung von Mikrowellensignalen eine sehr detaillierte Analyse der den Näherungssensor umgebenden Bewegungen ermöglicht, wobei jedoch die Manipulationssicherheit durch das Optomodul gewährleistet ist. Somit sind erfindungsgemäß die Vorteile eines Mikrowellensensors mit den Vorteilen eines optischen Sensors verbunden worden.

Mit Hilfe eines Mischelementes wird während der Personenerkennung von der Steuervorrichtung das Differenzsignal aus dem ausgestrahlten Mikrowellensignal mit konstanter Frequenz und dem reflektierten Signal mit der Frequenz der reflektierten Mikrowellenstrahlung erzeugt. Das Differenzsignal wird dahingehend analysiert, daß mit Hilfe der Steuervorrichtung einzelne Perioden des Differenzsignals bestimmt werden und die Differenzen von jeweils zwei zeitlich nacheinander auftretenden Perioden gebildet werden. Eine unregelmäßige Bewegung wird daraus dann abgeleitet, wenn der Betrag der Differenz zweier Perioden einen vorgegebenen Wert überschreitet. In bevorzugter Weise wird dabei jede Periode des Differenzsignales ausgewertet.

Es ist also erkannt worden, daß die für eine Person typische unregelmäßige Bewegung aus dem Gradienten der Periodendauer abgeleitet werden kann. Sind die Periodendauern über einen vorgegebenen Zeitraum gleich oder im wesentlichen gleich, so handelt es sich um eine lineare Bewegung, die typisch für Gegenstände ist, die sich mit konstanter Geschwindigkeit auf den Näherungssensor zu- oder wegbewegen. Ändert sich jedoch die Periodendauer, so bedeutet dieses eine Frequenzänderung des reflektierten Signals, die einer sich ändernden Geschwindigkeit des Gegenstandes entlang der Ausbreitungsrichtung der abgestrahlten Mikrowellenstrahlung entspricht. Der Gradient der Periodendauern stellt also ein Maß für die unregelmäßige Bewegung einer Person dar. Wählt man nun den vorgegebenen Wert in geeigneter Weise, so können zuverlässig lineare Bewegungen von Gegenständen von unregelmäßigen Bewegungen einer Person unterschieden werden, so daß ein zuverlässiger Nachweis einer Person mit Hilfe des erfindungsgemäßen Verfahrens möglich ist. Die Genauigkeit und Zuverlässigkeit dieses Verfahrens sind dabei erheblich gegenüber dem aus dem Stand der Technik bekannten Verfahren verbessert.

Typisch für die unregelmäßige und schwankende Bewegung einer Person ist es, daß diese Bewegungen im Vergleich zu anderen Bewegungen relativ langsam sind. Daher wird bei einer bevorzugten Ausgestaltung der Erfindung dann eine unregelmäßige Bewegung festgestellt, wenn zusätzlich die Perioden des Differenzsignals einen vorgegebenen Wert überschreiten, wenn also die Differenzfrequenz zwischen dem ausgestrahlten und dem reflektierten Mikrowellensignal kleiner als ein entsprechender Wert ist. Somit kann die unregelmäßige Bewegung einer Person von schnelleren unregelmäßigen Bewegungen unterschieden werden, die beispielsweise bei Vibrationen vorliegen, die durch Motoren hervorgerufen werden.

Weiterhin wird bei einer bevorzugten Ausgestaltung der Erfindung das reflektierte Mikrowellensignal nur dann ausgewertet, wenn die Intensität des reflektierten Mikrowellensignals oberhalb einer vorgegebenen Amplitudenschwelle liegt. Somit wird in wirksamer Weise erreicht, daß nur die nähere Umgebung des Näherungssensors auf Bewegungen einer Person überwacht wird, während weiter entfernte Personen, die das Mikrowellensignal reflektieren, unterdrückt werden. Daher eignet sich der Näherungssensor besonders für eine Anwendung bei einer Vorrichtung zur Überwachung des Rückraumbereiches eines Kraftfahrzeuges.

Schließlich soll hervorgehoben werden, daß die Empfindlichkeit des Näherungssensor der erfindungsgemäßen Vorrichtung so hoch ist, daß selbst eine Person, die still steht und nur geringe unwillkürliche Bewegungen ausführt, mit dem Näherungssensor nachweisbar ist. Dieses gilt gerade dann, wenn es sich um eine Person handelt, die auf dem Trittbrett eines Müllsammel-Fahrzeuges steht. Während der Fahrt des Müllsammel-Fahrzeuges bewegt sich diese Person durch die auftretenden Schwankungen des Fahrzeuges erheblich, jedoch führt die Person auch bei stehendem Fahrzeug eine ausreichende Bewegung aus, um mit dem erfindungsgemäßen Verfahren nachgewiesen zu werden.

Die zuvor beschriebene sowie die im folgenden dargestellte Ausführungsform der Erfindung eignet sich nicht nur zur Überwachung des Rückraumbereiches, sondern generell auch für die Überwachung eines der Seitenbereiche des Kraftfahrzeuges, da auch dort für bestimmte Fahrzeuge die Notwendigkeit besteht, eine sich im Gefahrenbereich des Fahrzeuges aufhaltende Person zu schützen. Dieses gilt insbesondere für Müll-Sammelfahrzeuge, die entweder an der Rückwand oder an einer Seitenwand Ladevorrichtungen für den zu sammelnden Müll aufweisen.

Das oben aufgezeigte technische Problem wird erfindungsgemäß auch durch eine Vorrichtung zur Überwachung des Rückraumbereiches oder eines Seitenbereiches eines Kraftfahrzeuges mit den Merkmalen des Anspruches 8 gelöst.

Bei dieser zweiten Ausgestaltung der vorliegenden Erfindung weist der Näherungssensor zwei Mikrowellenmodule auf, von denen eines die Funktion des Senders und das andere die Funktion des Empfängers ausübt. Weiterhin sind die beiden Mikrowellenmodule beabstandet voneinander angeordnet und die Antennenkeulen der beiden Mikrowellenmodule sind so ausgestaltet, daß das Empfänger-Mikrowellenmodul sowohl direkt von dem Sender-Mikrowellenmodul eingestrahlte Mikrowellenstrahlung als auch innerhalb der Antennenkeule des SenderMikrowellenmoduls von einer Person oder einem Gegenstand reflektierte Mikrowellenstrahlung empfängt. Eine weiterhin vorgesehene Steuervorrichtung wertet dann das Signal des Empfänger-Mikrowellenmoduls dahingehend aus, ob eine Person oder ein Gegenstand im Erfassungsbereich des Näherungssensors vorhanden ist oder ob eine Manipulation an der Vorrichtung durchgeführt worden ist. Liegt eine der beiden Situationen vor, so gibt die Steuervorrichtung jeweils ein entsprechendes Ausgangssignal an die mit dem Näherungssensor verbundene Steuerung ab.

Das bedeutet, daß die emittierte Mikrowellenstrahlung über zwei verschiedene Wege zum Empfänger-Mikrowellenmodul gelangt. Zum einen breitet sich die Mikrowellenstrahlung auf direktem und somit auf kürzestem Weg zum Empfänger-Mikrowellenmodul aus. Zum anderen wird die Mikrowellenstrahlung innerhalb der Antennenkeule des Sender-Mikrowellenmoduls von einem zu erfassenden Gegenstand oder einer Person reflektiert und gelangt danach zum Empfänger-Mikrowellenmodul. Dieser zweite, längere Ausbreitungsweg führt zu einer zusätzlichen Phasenverschiebung im Vergleich zur direkten Übertragung.

In bevorzugter Weise ist ein Mischelement vorgesehen, das aus beiden empfangenen Signalen zumindest ein Differenzsignal erzeugt. Steht der Gegenstand bzw. die Person relativ zum Näherungssensor im wesentlichen still, so ergibt sich bei der Reflektion kein Dopplereffekt, so daß das reflektierte und das direkt übertragene Mikrowellensignal im wesentlichen dieselbe Frequenz aufweisen. Die Mischung beider Signale ergibt dann kein tief- oder hochfrequentes harmonisches Differenz- oder Summensignal, jedoch entsteht wegen der Phasendiffrenz ein Gleichsignal, dessen Wert von der Phasendifferenz abhängt. Bewegt sich dagegen der Gegenstand oder die Person innerhalb des Erfassungsbereiches des Näherungssensors, so verändert sich auch die Länge des Ausbreitungsweges der reflektierten Mikrowellenstrahlung und damit auch die Größe der Phasenverschiebung zwischen beiden Signalen. Dieses führt zu einer von der Bewegung des Gegenstandss oder der Person abhängigen Änderung des Gleichsignals. Diese charakteristische Änderung des Gleichsignals wird von der Steuervorrichtung erfaßt, so daß eine Person im Erfassungsbereich des Näherungssensors erfolgen kann. Beim Nachweis eines Gegenstandes oder einer Person gibt die Steuervorrichtung dann ein entsprechendes Signal an die mit dem Näherungssensor verbundene Steuerung ab.

Ist dagegen kein Gegenstand oder keine Person im Erfassungbereich des Näherungssensors vorhanden, so trifft nur die direkt vom Sender-Mikrowellenmodul übertragene Mikrowellenstrahlung auf das Empfänger-Mikrowellenmodul. Dann bildet sich an dem, beispielsweise als Mischdiode ausgebildeten Mischelement ein Gleichsignal aufgrund der Gleichrichterwirkung des Mischelementes aus. Dieses Gleichsignal weist einen Wert auf, der abhängig vom, insbesondere in Grenzen proportional zu dem Mikrowellensignalpegel ist.

Dieses Gleichsignal wird im übrigen dann bei Anwesenheit eines Gegenstandes oder einer Person im Erfassungsbereich des Näherungssensors von dem aus der Phasendifferenz entstehenden zusätzlichen Gleichsignal überlagert.

Wird eine Manipulation am Näherungssensor unternommen, indem beispielsweise das Sender-Mikrowellenmodul teilweise oder ganz abgeschirmt wird, so verringert sich die Menge an direkt eingestrahlter Mikrowellenstrahlung. Wird dagegen eine Abschirmung angebracht, die zwar eine direkte Übertragung der Mikrowellenstrahlung zum Empfänger-Mikrowellenmodul ermöglicht, aber den weiteren Erfassungbereich abschirmt, so wird dagegen aufgrund der Wirkung der Abschirmung als Hohlleiter die Menge der direkt übertragenen Mikrowellenstrahlung erhöht. Überwacht daher die Steuervorrichtung den Pegel des Gleichsignals, ob er innerhalb vorgegebener Grenzwerte liegt, so erzeugt die Steuervorrichtung bei einer Abweichung nach oben oder nach unten ein Manipulationsnachweissignal. Somit führt selbst ein teilweises oder vollständiges Abdecken eines oder beider Mikrowellenmodule zum Nachweis einer Manipulation.

Dabei wirkt sich besonders vorteilig aus, das das Medium der Mikrowellenstrahlung sowohl zur Detektion eines Gegenstandes oder einer Person als auch zur Detektion einer Manipulation angewendet wird.

Ein weiterer Vorteil besteht darin, daß der Erfassungsbereich des Näherungssensors genau definierbar ist, da aufgrund der versetzten Anordnung beider Mikrowellenmodule der Überschneidungsbereich beider Antennenkeulen den Erfassungsbereich des Näherungssensors bestimmt.

Wird weiterhin bei der Übertragung der Mikrowellenstrahlung ein Austausch von Informationen zwischen beiden Mikrowellenmodulen, bspw. mit Hilfe einer Puls- oder Frequenzmodulation, durchgeführt, so ist eine Selbstüberprüfung des Näherungssensors einschließlich der Mikrowellenmodule und deren Manipulationsfreiheit möglich.

Schließlich ist es auch möglich, daß die Steuervorrichtung die Periodendauern des Differenzsignals mit Hilfe eines Prozessors analysiert, wie es oben ausführlich beschrieben worden ist.

Wird von der Steuervorrichtung ein Nachweissignal der Personenerkennung und/oder ein Manipulationsnachweissignal von der Steuervorrichtung an die mit dem Näherungssensor verbundene Steuerung übertragen so wird der Schaltzustand des Schaltmittels verändert und eine Betriebsfunktion des Kraftfahrzeuges beeinflußt. Dieses kann darin bestehen, daß eine Geschwindigkeitsbegrenzung aktiviert wird oder daß eine Zubehörhydraulik oder -mechanik blockiert wird. Ist weiterhin ein zweites Schaltmittel vorgesehen, daß bei eingelegtem Rückwärtsgang schaltet, so kann durch eine entsprechende AnSteuerung durch die Steuervorrichtung des Näherungssensors ein Motorstop und/oder eine Bremse aktiviert und/oder das Getriebe des Kraftfahrzeuges in die Leerlaufstellung geschaltet werden.

Obwohl zuvor die Näherungssensoren lediglich in ihrer Anwendung bei der Vorrichtung zur Überwachung des Rückraumbereiches oder eines Seitenbereiches eines Kraftfahrzeuges beschrieben worden sind, weisen die Ausgestaltungen des Näherungssensors sowie der zugrundeliegenden Verfahren jeweils einen eigenständigen erfinderischen Charakter unabhängig von dieser Überwachungsvorrichtung auf.

Weitere Merkmale und Vorteile der vorliegenden Erfindung werden im folgenden anhand von Ausführungsbeispielen näher erläutert, wobei auf die beigefügte Zeichnung Bezug genommen wird. In der Zeichnung zeigt
- Fig. 1: ein erstes Ausführungsbeispiel eines erfindungsgemäßen Näherungssensor in einer Vorderansicht,
- Fig. 2: ein Blockschaltbild des in Fig. 1 dargestellten Näherungssensors,
- Fig. 3: eine graphische Darstellung der Signale, die durch mit Hilfe der Steuervorrichtung ausgewertet werden,
- Fig. 4: ein Müllsammel-Fahrzeug mit einer erfindungsgemäßen Vorrichtung zur Sicherung des Rückraumbereiches in einer Seitenansicht,
- Fig. 5: das in Fig. 4 dargestellte Kraftfahrzeug in einer Ansicht von hinten und
- Fig. 6: ein zweites Ausführungsbeispiel eines erfindungsgemäßen Näherungssensors in einer schematischen Darstellung.

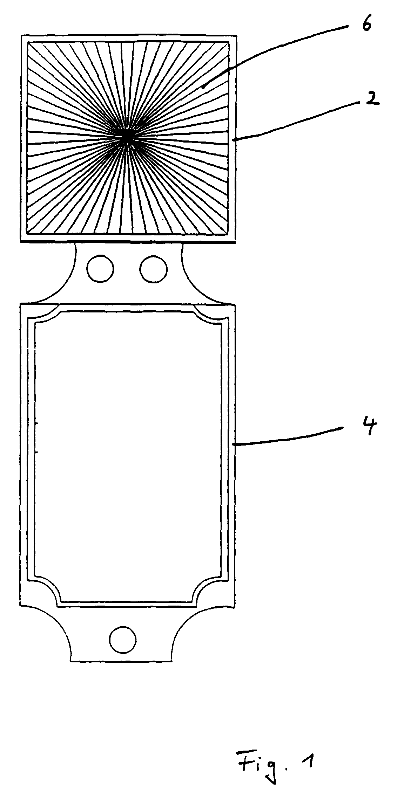

In Fig. 1 ist ein erstes Ausführungsbeispiel eines erfindungsgemäßen Näherungssensors in einer Vorderansicht dargestellt. Der Näherungssensor weist einen Sensorkopf 2 sowie einen Funktionsteil 4 auf. Im Sensorkopf 2 sind hinter einer Abdeckscheibe 6 ein Mikrowellenmodul 8 und ein Optomodul 10 vorgesehen, die in Fig. 1 hinter der Abdeckscheibe 6 angeordnet sind und somit nicht zu erkennen sind. Das Mikrowellenmodul 8 weist eine Mikrowellen ausstrahlende und empfangende Antenne auf, die von einem Hochfrequenzresonanzkreis mit einer Leistung versorgt wird, die als Mikrowellenstrahlung von der Antenne ausgestrahlt wird. Dabei liegt bei dem vorliegenden Ausführungsbeispiel die Leistung der ausgestrahlten Mikrowellenstrahlung im Bereich von 10 mW. Das Optomodul 10 weist dagegen einen optische Strahlung aussendenden optischen Sender sowie einen reflektierte optische Strahlung empfangenden optischen Empfänger auf. Sowohl Sender als auch Empfänger sind von herkömmlicher Bauart und bedürfen daher keiner näheren Erläuterung. Schließlich ist im Funktionsteil 4 des Näherungssensors eine Steuervorrichtung 12 zur Auswertung des von dem Mikrowellenmodul 8 erzeugten Ausgangssignals sowie des vom Optomodul 10 erzeugten Ausgangssignals vorgesehen. Die Steuervorrichtung weist dazu ein Netzteil 14, ein Analogteil 16, einen Prozessor 18 sowie eine Endstufe 20 auf.

Im Mikrowellenmodul ist weiterhin eine Mischerdiode integriert, mit der das Differenzsignal erzeugt wird. Dabei wird ein Teil des ausgestrahlten Signals mit konstanter Frequenz mit dem empfangenen reflektierten Signal mit der Frequenz der reflektierten Mikrowellen gemischt. Das Mischelement erzeugt daraus ein Differenzsignal mit der Differenzfrequenz beider Signale. Das Ausgangssignal der Mischerdiode wird innerhalb des Mikrowellenmoduls 8 verstärkt und steht dann zur weiteren Verarbeitung durch das Funktionsteil 4 mit ausreichender Signalhöhe zur Verfügung.

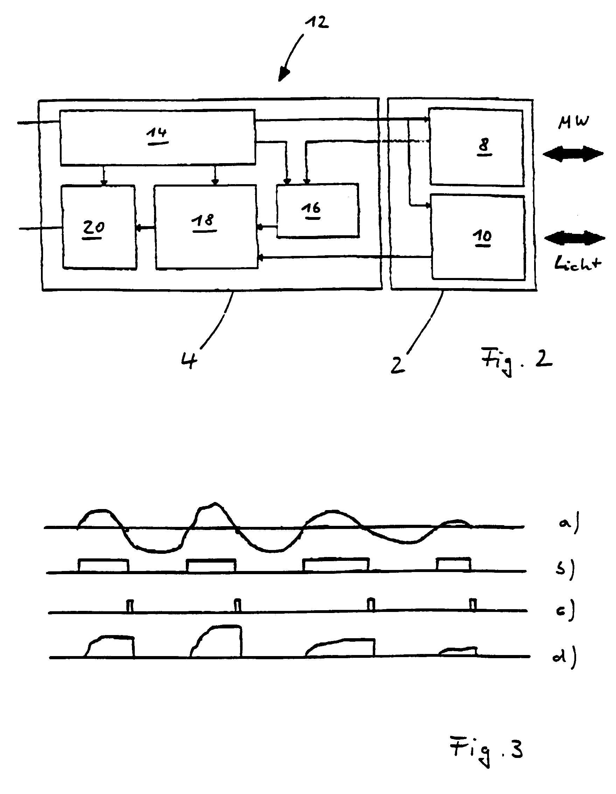

Das Analogteil 16 des Funktionsteils 4 dient der weiteren Aufbereitung der vom Mikrowellenmodul 8 kommenden Signale. Ein typisches Beispiel eines analogen Differenzsignals ist in Fig. 3a dargestellt. Es weist neben unterschiedlichen Amplituden auch unterschiedliche Periodendauern auf. Im Analogteil 16 wird zunächst eine Bandpassfilterung dieses Eingangssignals in üblicher Weise durchgeführt. Das sich daraus ergebende Signal wird zu einem Teil in ein binäres Rechtecksignal umgewandelt, das in Fig. 3b dargestellt ist. Das binäre Rechtecksignal besteht aus Signalanteilen mit positiver Spannung sowie aus Signalanteilen mit der Spannung gleich Null. Die Zeitdauern der Abschnitte mit Positiver Spannung des binären Rechtecksignals entsprechen jeweils dem Abstand der Nulldurchgänge des analogen Differenzsignals, zwischen denen das analoge Differenzsignal einen positiven Spannungswert aufweist. In entsprechender Weise entspricht die zeitliche Länge des binären Rechtecksignals mit dem Wert gleich Null dem zeitlichen Abstand der beiden Nulldurchgänge, zwischen denen das analoge Differenzsignal negativ ist. Somit entspricht der zeitliche Abstand zwischen jeweils zwei positiven Flanken des binären Rechtecksignals der Periode des analogen Differenzsignals.

Ein weiterer Teil des nach der Bandpassfilterung vorliegenden Signals wird einer Abtast- und Halteschaltung zugeführt, mit deren Hilfe der maximale Amplitudenwert jeder Periode des analogen Differenzsignals gehalten wird. Das Ausgangssignal der Abtast- und Halteschaltung ist in Fig. 3d dargestellt. Vom Prozessor 18 wird im Zeitpunkt jeder negativen oder positiven Flanke des binären Rechtecksignals ein Abtastsignal erzeugt, mit dem das Ausgangssignal der Abtastund Halteschaltung ausgelesen wird, wobei gleichzeitig der zugehörige Speicherkondensator entladen wird. Somit liegen zwei Informationen am Prozessor 18 an, nämlich die Periodendauer sowie die Amplitude des analogen Differenzsignals, die vom Prozessor 18 weiter verarbeitet werden.

Der Prozessor 18 bestimmt jede Periode des Differenzsignals und vergleicht die so bestimmten Perioden von zwei zeitlich aufeinander folgenden Perioden des Differenzsignals. Die berechnete Differenz der Perioden wird weiterhin mit einem vorgegebenen Wert verglichen. Überschreitet der Betrag der Differenz zweier Perioden diesen vorgegebenen Wert, so liegt eine Änderung der Geschwindigkeit der Bewegung in Richtung der ausgestrahlten Mikrowellenstrahlung vor. Ein solcher sprunghafter Wechsel zwischen zwei Perioden wird im folgenden auch als "diskontinuierliche Periode" bezeichnet. Vorzugsweise wird erst dann eine unregelmäßige Bewegung durch den Prozessor 18 festgestellt, wenn neben dem Auftreten einer diskontinuierlichen Periode die Periode des Differenzsignals selbst einen vorgegebenen Wert überschreitet. Dem liegt die Erkenntnis zugrunde, daß bei einer Personenerkennung die Geschwindigkeit der Bewegung der Person in der Regel einen bestimmten Wert nicht überschreitet. Dementsprechend sind höhere Geschwindigkeiten nicht einer Person zuzuordnen, die zu kürzeren Perioden des Differenzsignales führen.

Bei dem dargestellten Ausführungsbeispiel weist der Prozessor 18 einen nicht dargestellten Zähler auf, der mit jeder diskontinuierlichen Periode um einen Wert bis zu einem maximalen Endwert heraufgezählt wird. Vom Prozessor 18 wird erst dann eine unregelmäßige Bewegung festgestellt, wenn innerhalb eines vorgegebenen Zeitraumes der Zählerstand des Zählers einen vorgegebenen Schwellenwert überschreitet. Das bedeutet, daß nicht bei jeder festgestellten diskontinuierlichen Periode ein entsprechendes Ausgangssignal vom Näherungssensor ausgegeben wird, sondern daß eine Mehrzahl von diskontinuierlichen Perioden innerhalb eines vorgegebenen Zeitintervalls aufgetreten sein müssen, bevor ein entsprechendes Ausgangssignal erzeugt wird.

Zur Festlegung eines vorgegebenen Zeitraumes ist im Prozessor ein separater Zeittaktgeber vorgesehen, der einen Zeittakt erzeugt, mit dem der Zähler bis minimal auf den Wert Null heruntergezählt beziehungsweise dekrementiert wird. Auch in diesem Fall wird vom Prozessor 18 dann eine unregelmäßige Bewegung festgestellt, wenn der Zählerstand einen vorgegebenen Schwellenwert überschreitet. Durch das kontinuierliche Herabzählen des Zählers wird somit vorgegeben, daß im Mittel mehr diskontinuierliche Perioden ermittelt und mit dem Zähler heraufgezählt werden müssen, als durch den separaten Zeittaktgeber der Zähler herabgezählt wird, damit die Zählrate den vorgegebenen Schwellenwert überschreitet.

Um ein ständiges Hin- und Herschalten des Ausgangssignals zu verhindern, wenn sich der Zählerstand im Bereich des Schwellenwertes befindet und sich abwechselnd oberhalb und unterhalb des Schwellenwertes befindet, wird in weiter erfindungsgemäßer Weise bei einem Überschreiten des Schwellenwertes des Zählers dieser Schwellenwert abgesenkt. Eine unregelmäßige Bewegung wird erst dann nicht mehr festgestellt, wenn der Zählerstand den niedrigeren Schwellenwert unterschritten hat. Somit wird eine Hysterese erzeugt, die ein dauerndes Hin- und Herschalten des Ausgangssignals verhindert.

Der Prozessor 18 überträgt das Ausgangssignal auf die Endstufe 20. Die Endstufe 20 besitzt die Funktionalität einer monostabilen Kippstufe und verlängert die Ansteuerimpulse, die vom Prozessor 18 übermittelt werden, um eine vorgegebene Zeitdauer von beispielsweise zwei Sekunden. Damit steht bei typischen unregelmäßigen Bewegungen einer Person ein weitgehend ununterbrochenes Ausgangssignal der Endstufe 20 zur Verfügung.

Wie bereits oben dargestellt worden ist, liegt am Prozessor 18 ein zweites Ausgangssignal des Analogteils 16 an, das die Amplitude des analogen Differenzsignals charakterisiert. Das Ausgangssignal wird vom Prozessor 18 dahingehend analysiert, daß die Intensität des reflektierten Mikrowellensignals oberhalb einer vorgegebenen Amplitudenschwelle liegen muß, damit das reflektierte Mikrowellensignal der Auswertung der Periodendauer unterzogen wird. Damit wird verhindert, daß weit entfernte Personen oder auch andere Gegenstände, deren reflektiertes Signal nur eine geringe Intensität aufweist, erfaßt werden.

Wie ebenfalls oben bereits erläutert worden ist, weist der Sensorkopf 2 neben dem Mikrowellenmodul 8 auch ein Optomodul 10 auf. Das Optomodul 10 weist eine Infrarotstrahlung emitierende Sendediode und eine Fototransistor als Empfänger der optischen Strahlung auf. Weiterhin ist im Optomodul 10 ein Signalgeber zur Modulation des Infrarotlichtes vorgesehen. Mit gleicher Modulation wird der Fototransistor betrieben, so daß ein Hintergrundsignal in üblicher Weise unterdrückt werden kann. Dazu dient auch ein Infrarotfilter, der im Strahlengang des Infrarotlichtes angeordnet ist.

Das von der Sendediode emitierte, an einer Person oder einem Gegenstand reflektierte und vom Fototransistor empfangene Licht erzeugt einen Fotostrom, dessen Amplitude mit einem festen Schwellenwert verglichen wird. Wird der Schwellenwert überschritten, so gibt das Optomodul 10 ein Nachweissignal an den Prozessor 18 ab. Bei Anliegen dieses Nachweissignals wird vom Prozessor 18 die Endstufe 20 zur Abgabe eines entsprechenden Ausgangssignals angesteuert. Da beim vorliegenden Ausführungsbeispiel das Optomodul 10 den Nahbereich des Näherungssensors überwacht, werden somit in wirksamer Weise Manipulationen des Mikrowellenmoduls 8 des Näherungssensors erkannt. Das Ausgangssignal des Optomoduls 10 wird mit den Ansteuerimpulsen der zuvor beschriebenen Auswertung der Signale vom Mikrowellenmodul 8 gemäß einer ODER-Funktion verknüpft und bei Vorliegen eines der beiden Nachweissignale wird der abfallverzögerte Ausgang der Endstufe 20 geschaltet.

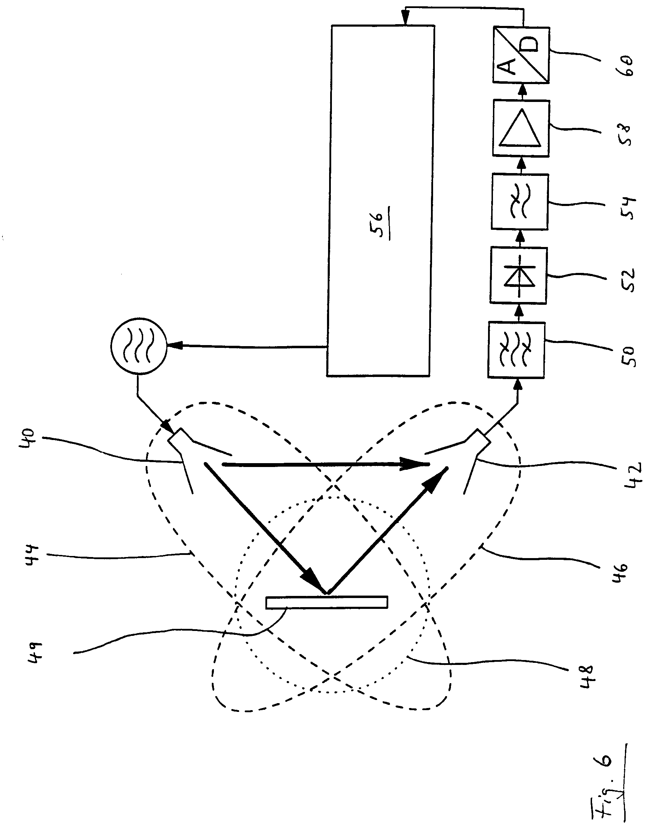

In der Fig. 6 ist ein zweites Ausführungsbeispiel eines erfindungsgemäßen Näherungssensors dargestellt. Der Näherungssensor weist im wesentlichen ein erstes sog. Sender-Mikrowellenmodul 40 und ein zweites sog. Empfänger-Mikrowellenmodul 42 auf. Dabei umfaßt das Empfänger-Mikrowellenmodul 40 neben der Sendeantenne auch den Oszillator, während das Empfänger-Mikrowelleumodul 42 neben der Empfangsantenne mindestens eine Mischstufe 52 aufweist.

Die beiden Mikrowellenmodule 40 und 42 sind in der Weise angeordnet, daß sie erstens einen definierten Abstand von beispielsweise 0,5 m zueinander besitzen und zweitens so ausgerichtet sind, daß sich die Antennenkeulen 44 und 46 der Antennen der beiden Mikrowellenmodule 40 und 42 in einem definierten Bereich vor den Mikrowellenmodulen 40 und 42, dem Erfassungsbereich 48 des Näherungssensors, überschneiden. Beispielsweise schneiden sich die Hauptachsen der beiden Antennenkeulen 44 und 46 unter einem Winkel von 45°. Dabei können die beiden Mikrowellenmodule 40 und 42 in separaten oder in einem gemeinsamen Gehäuse integriert sein.

Die vom Sender emittierte Mikrowellenstrahlung breitet sich über zwei verschiedene Wege zum Empfänger-Mikrowellenmodul 42 aus. Zum einen auf direktem und damit kürzestem Weg, zum anderen durch Reflektion am zu erfassenden Zielobjekt 49, das sich im Erfassungsbereich des Näherungssensors befindet und entweder ein dort angeordneter Gegenstand oder eine Person ist. Dieser zweite, längere Ausbreitungsweg führt zu einer zusätzlichen Phasenverschiebung im Vergleich zur direkten Übertragung zwischen beiden Mikrowellenmodulen 40 und 42. Wegen dieser Phasendifferenz kommt es in der Antenne des Empfängermikrowellenmoduls 42 zur Überlagerung zweier harmonischer, phasenverschobener Mikrowellensignale.

Dieses kombinierte Empfangssignal durchläuft einen Bandpaßfilter 50 und erreicht dann eine aus einer Mischdiode bestehenden Mischstufe 52. Hier werden die beiden Signalkomponenten miteinander multipliziert. Das Produkt besteht aus der Differenz und der Summe der beiden Signalanteil. Ein Tiefpaßfilter 54 hält den hochfrequenten Signalanteil zurück. Die nachgeschaltete Steuervorrichtung 56 wertet dann das gewonnene Signal im Hinblick auf die Anwesenheit des Zielobjektes 49 oder einer Manipulation aus.

Da sowohl der der direkt ausgebreitete als auch der über das Zielobjekt 49 reflektierte Signalanteil von derselben Quelle erzuegt werden, besitzen sie, ein statisches Zielobjekt 49 vorausgesetzt, dieselbe Frequenz und erzeugen damit kein tieffrequentes harmonisches Mischprodukt. Wegen der Phasendifferenz entsteht dabei jedoch ein phasenwinkelabhängiges Gleichsignal an der Mischstufe 52.

Bewegt sich nun das Zielobjekt 49 innerhalb des Erfassungsbereiches 48 zum Näherungssensor hin oder von ihm weg, so verändert sich auch die Länge des zweiten Ausbreitungsweges und damit auch die Größe der Phasenwinkeldifferenz. Dies führt zu einem sich charakteristisch verändernden Gleichsignal am Ausgang des Tiefpaßfilters 54. Dieses Gleichsignal verändert sich in Abhängigkeit von der Bewegung des Zielobjektes 49, so daß sich an dem Gleichsignal die Anwesenheit eines sich bewegenden Menschen mit Restbewegung erkennen läßt.

Befindet sich dagegen kein Zielobjekt 49 im Erfassungsbereich 48 des Näherungssensors, so setzt sich das Empfangssignal lediglich aus dem direkt übertragenen Anteil zusammen. Dieser Signalanteil führt wegen der Gleichrichtungswirkung der Mischdiode 52 zu einem Gleichspannungspegel, der dem Hochfrequenzsignalpegel in Grenzen proportional ist. (Diesem wiederum überlagert sich dann bei vorhandenem Zielobjekt 49 das aus der Phasendifferenz entstehende zusätzliche Gleichsignal.)

Überwacht die Steuervorrichtung den Pegel dieses Gleichsignals dahingehend, ob der Pegel sich innerhalb vorgegebener Grenzen befindet, so ist die Detektion von Manipulationsversuchen möglich. Häufig wird mit einfachem Abdecken des Näherungssensors versucht, die Personenerkennung zu unterdrücken. Dann ergibt sich ein Pegel des Gleichspannungssignals, der gegenüber einem normalen Betrieb abgesenkt ist. Wird dagegen der Näherungssensor so manipuliert und abgeschirmt, daß nur Mikrowellenstrahlung direkt, aber nicht über eine Reflektion innerhalb des Erfassungsbereiches des Näherungssensors übertragen wird, so erhöht sich wegen der Bündelung der Mikrowellenstrahlung aufgrund des Hohlleitereffektes die Intensität des Gleichspannungssignals. Daher führt beim vorgeschlagenen Verfahren selbst ein vollständiges Abschirmen einer oder beider Mikrowellenmodule 40 und 42 zur Erkennung des Manipulationsversuches.

Vorteilhaft ist dabei, daß genau das Medium der Mikrowelle, das zur Detektion der Personenbewegung Verwendung findet, auch das Medium ist, welches zum Erkennen einer Manipulation eingesetzt wird. Außerdem umgeht dabei der Schrankenbetrieb (Sender und Empfänger in getrennten Gehäusen) die prinzipbedingten Einschränkungen energetischer Näherungssensoren, bei denen eine Manipulation mit einem absorbierenden Material möglich ist.

Das ausgesendete Mikrowellensignal kann weiterhin mit einer Pulsmodulation versehen werden. Dabei wird das Sender-Mikrowellenmodul 40 innerhalb eines vorgegebenen Zeitzyklus komplett ein- und wieder ausgeschaltet. In der Amplitude des verstärkten und bandgefilterten Empfangssignales steckt dann die Information des auszuwertenden Gleichspannungspegels. Dadurch werden verschiedene Vorteile erzielt.

Zum einen wird eine bessere Störsicherheit erreicht, da aufgrund des gepulsten Betriebes andere Hintergrundquellen ausgeblendet werden können. Weiterhin können bei einem gepulsten Betrieb die aus der Mischstufe kommenden Signale mit Hilfe kapazitiv gekoppelter Verstärkerstufen weiterverarbeitet werden, wodurch sich eine leichtere Verarbeitbarkeit des Empfangssignals ergibt. Schließlich ermöglicht es die gepulste Betriebsweise, die Option auf eine zusätzliche Sicherung gegen Manipulation sowie auch eine Fehlersicherheit zu erhalten, indem mit Hilfe der Pulse Informationen übertragen werden.

Damit wird es möglich, vom Sender-Mikrowellenmodul 40 zum Empfänger-Mikrowellenmodul 42 Daten auszutauschen, beispielsweise über pulsmoduliertes Frequency Shift Keying, FSK. Fallen beim Empfänger-Mikrowellenmodul 42 die Daten des Senders-Mikrowellenmoduls 40 aus, so wird eine Manipulation erkannt.

Wird die Betriebsweise des Näherungssensors in der Art erweitert, das sowohl das Sender-Mikrowellenmodul 40 als auch das Empfänger-Mikrowellenmodul 42 die jeweils andere Funktion frei wählbar übernehmen können, dann kann eine dezentrale, auf beide Mikrowellenmodule 40 und 42 aufgeteilte Steuerung intermittierend die beiden Mikrowellenmodule 40 und 42 mal als Sender und mal als Empfänger betreiben. Werden dabei jeweils Daten vom Sender zum Empfänger übertragen und wird diese Übertragung ausgewertet und dazu benutzt, die Senderichtung automatisch umzuschalten, so kann das Aussetzen des bidirektionalen Datenstromes als Manipulation oder als Systemausfall ausgewertet werden. Diese Option ermöglicht wegen der dann weitgehend redundanten Ausführung der Komponenten des Näherungssensors und deren gegenseitigen Überwachung den Aufbau eines fehlersicheren Näherungssensors.

Bei dem beschriebenen Verfahren handelt es sich um ein Dopplerradarverfahren. Bei aus dem Stand der Technik bekannten gängigen Dopplerradar sind Sender und Empfänger in ein gemeinsames Gerät integriert, wobei meistens dieselbe Antenne zum Senden und Empfangen verwendet wird. Wird eine Zweiantennenlösung eingesetzt, so wird normalerweise das Referenzsignal geräteintern über Leitungen dem Mischer zugeführt. Damit befinden sich Sender, Empfänger und Zielobjekt auf einer gemeinsamen Achse. Der erfindungsgemäße Näherungssensor unterscheidet sich im wesentlichen darin, daß auch das Referenzsignal über eine Luftstrecke übertragen wird und daß die Anordnung Sender, Empfänger und Zielobjekt sich nicht mehr auf einer Achse, sondern in einer Dreiecksanordnung befindet. Bedingt durch diese offene Anordnung und bedingt durch die Auswertung des direkt übertragenen Referenzsignales sind Manipulationsversuche, die ein Personenerkennen verhindern sollen, nicht mehr erfolgreich. Ein weiterer Vorteil des Verfahrens ist die teilweise Hintergrundausblendung durch die angewendete Triangulation, durch die Überreichweiten reduziert werden.

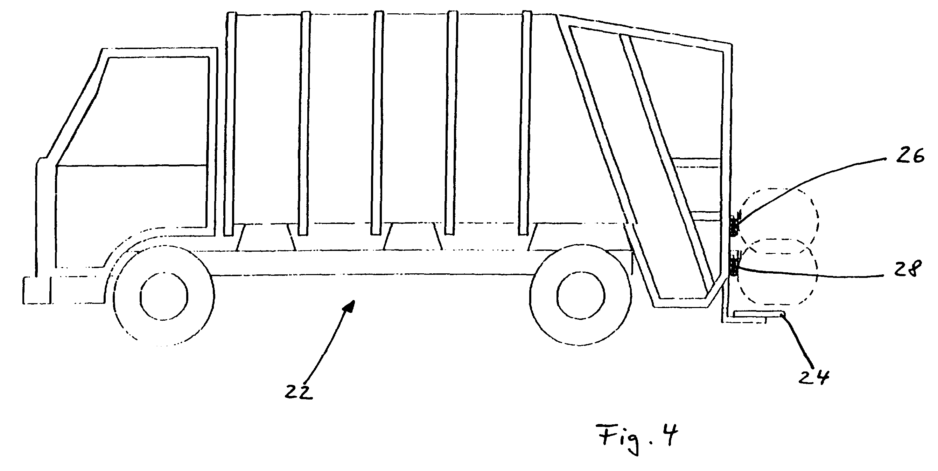

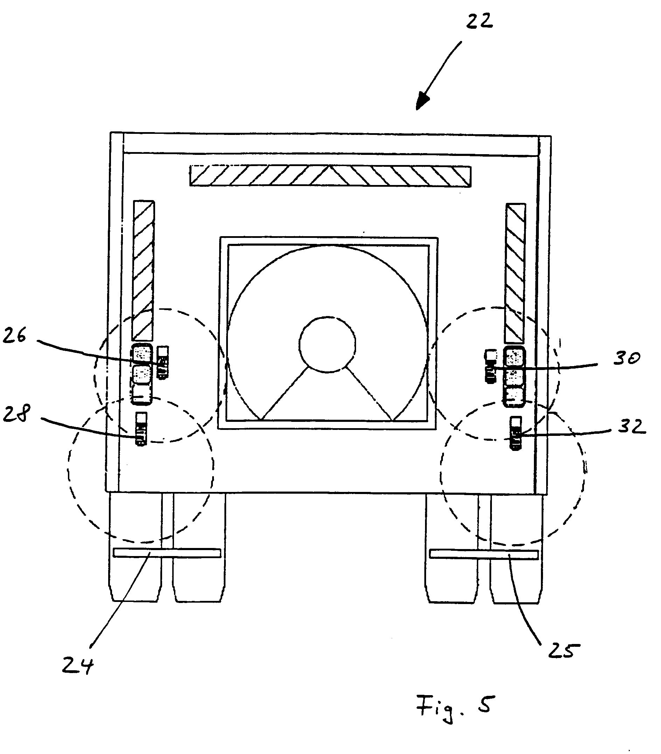

In den Fig. 4 und 5 ist eine erfindungsgemäße Vorrichtung zur Sicherung des Rückraumbereiches eines Kraftfahrzeuges 22 dargestellt, wobei auf jeder Seite der hinteren Fläche des Kraftfahrzeuges 22 jeweils zwei Näherungssensoren 26, 28, 30, 32 der zuvor beschriebenen Art angebracht sind, die jeweils teilweise den hinter dem Kraftfahrzeug 22 angeordneten Rückraumbereich erfassen. Dieses ist in den Fig. 4 und 5 durch die gestrichelten kreis- oder elipsenförmigen Bereiche angedeutet. Außerdem kann diese Vorrichtung auch für die Überwachung eines der Seitenbereiche verwendet werden, jedoch ist dieses in der Zeichnung nicht separat dargestellt.

Die erfindungsgemäße Vorrichtung weist weiterhin eine nicht dargestellte Steuerung auf, die über eine elektrische Leitung mit den Näherungssensoren 26, 28 30 und 32 verbunden ist. Die Steuerung weist ein erstes Schaltmittel auf, das bei Vorliegen eines Ausgangssignals eines der Näherungssensoren 26, 28, 30, 32 schaltet, wodurch eine Betriebsfunktion des Kraftfahrzeuges 22 beeinflußt wird. Eine derartige Beeinflussung kann darin bestehen, daß eine Geschwindigkeitsbegrenzung des Kraftfahrzeuges 22 aktiviert und/oder eine Zubehörhydraulik oder - mechanik blockiert wird.

Weist die Steuerung darüber hinaus ein zweites Schaltmittel auf, das bei eingelegtem Rückwärtsgang schaltet, so kann beim Schalten sowohl des ersten Schaltmittels als auch des zweiten Schaltmittels ein Motorstop aktiviert und/oder mindestens eine Bremse des Kraftfahrzeuges 22 aktiviert und/oder das Getriebe des Kraftfahrzeuges 22 in die Leerlaufstellung geschaltet werden. Dabei handelt es sich nicht um eine abschließende Aufzählung von Betriebsfunktionen des Kraftfahrzeuges, die durch die erfindungsgemäße Vorrichtung zur Überwachung des Rückraumbereiches oder eines Seitenbereiches beeinflußt werden können.

In den Fig. 4 und 5 ist als Beispiel eines Kraftfahrzeuges 22 ein Müllsammel-Fahrzeug dargestellt, das in typischer Weise an der hinteren Seite Trittbretter 24 und 25 aufweist, auf denen jeweils eine Bedienperson während der Fahrt stehen kann. Die Näherungssensoren 26, 28, 30 und 32 sind bei dem dargestellten Ausführungsbeispiel so an der Rückseite des Müllsammel-Fahrzeuges angeordnet, daß der Teil des Rückraumbereiches von den Näherungssensoren 26 bis 32 überwacht wird, in dem sich eine auf einem Trittbrett 24 bzw. 25 stehende Person erfaßt und nachgewiesen wird. Der Erfassungsbereich der Näherungssensoren erstreckt sich jedoch auch über die Trittbretter 24 und 25 nach hinten hinaus, so daß auch eine in diesem Bereich auf dem Boden stehende Person erfaßt und gegen ein Anfahren bei einer Rückwärtsfahrt des Müllsammel-Fahrzeuges geschützt wird.

## Patentansprüche

1. Vorrichtung zur Sicherung des Rückraumbereiches eines Kraftfahrzeuges (22)
- mit mindestens einem Näherungssensor (26, 28, 30, 32) der zumindest teilweise den hinter dem Kraftfahrzeug (22) angeordneten Rückraumbereich erfaßt, und
- mit einer Steuerung, die über eine elektrische Leitung mit dem Näherungssensor (26, 28, 30, 32) verbunden ist,
- wobei die Steuerung mindestens ein Schaltmittel aufweist, das bei Vorliegen des Ausgangssignals des Näherungssensors (26, 28, 30, 32) zur Beeinflussung einer Betriebsfunktion des Kraftfahrzeuges (22) schaltet,
**dadurch gekennzeichnet,**
daß der Näherungssensor (26, 28, 30, 32)
- ein Mikrowellenmodul (8), das mindestens eine Mikrowellen ausstrahlende und empfangende Antenne aufweist,
- ein den Nahbreich des Näherungssensors überwachendes Optomodul (10), das einen optische Strahlung aussendenden optischen Sender und einen reflektierte optische Strahlung empfangenden optischen Empfänger aufweist, und
- eine Steuervorrichtung (12) zur Auswertung des von dem Mikrowellenmodul (8) erzeugten Ausgangssignals sowie des vom Optomodul (10) erzeugten Ausgangssignals aufweist.

2. Vorrichtung nach Anspruch 1, dadurch gekennzeichnet, daß der Näherungssensor (26, 28, 30, 32) ein Mischelement, vorzugsweise eine Mischerdiode, zur Mischung eines Teils des ausgestrahlten Signals mit konstanter Frequenz mit dem empfangenen reflektierten Signal mit der Frequenz der reflektierten Mikrowellen aufweist und daß das Mischelement zumindest ein Differenzsignal mit der Differenzfrequenz erzeugt.

3. Vorrichtung nach Anspruch 2, dadurch gekennzeichnet, daß die Steuervorrichtung (12) einen Prozessor (18) aufweist, der die Perioden, vorzugsweise jede Periode des Differenzsignals bestimmt, die Differenz von zeitlich aufeinanderfolgenden Perioden des Differenzsignals bestimmt und die berechnete Differenz mit einem vorgegebenen Wert vergleicht.

4. Vorrichtung nach Anspruch 3, dadurch gekennzeichnet, daß der Prozessor (18) einen Zähler aufweist.

5. Vorrichtung nach Anspruch 4, dadurch gekennzeichnet, daß der Prozessor (18) einen separaten Zeittaktgeber aufweist.

6. Vorrichtung nach einem der Ansprüche 1 bis 5, dadurch gekennzeichnet, daß das Optomodul (10) Infrarotlicht, vorzugsweise mit einer Pulsmodulation aussendet.

7. Vorrichtung nach einem der Ansprüche 1 bis 6, dadurch gekennzeichnet, daß ein Infrarotfilter im Strahlengang des Infrarotlichtes angeordnet ist.

8. Vorrichtung zur Sicherung des Rückraumbereiches oder eines Seitenbereiches eines Kraftfahrzeuges (22)
- mit mindestens einem Näherungssensor der zumindest teilweise den hinter oder seitlich neben dem Kraftfahrzeug angeordneten Rückraumbereich oder Seitenbereich erfaßt, und
- mit einer Steuerung, die über eine elektrische Leitung mit dem Näherungssensor verbunden ist,
- wobei die Steuerung mindestens ein Schaltmittel aufweist, das bei Vorliegen des Ausgangssignals des Näherungssensors zur Beeinflussung einer Betriebsfunktion des Kraftfahrzeuges schaltet,
**dadurch gekennzeichnet,**
- daß der Näherungssensor ein erstes Mikrowellenmodul (40), das mindestens eine Mikrowellen ausstrahlende Antenne aufweist, und ein zweites Mikrowellenmodul (42) aufweist, das mindestens eine Mikrowellen empfangende Antenne aufweist,
- daß das erste Mikrowellenmodul (40) und das zweite Mikrowellenmodul (42) beabstandet voneinander angeordnet sind,
- daß die Antennenkeulen (44, 46) der Antennen des ersten und zweiten Mikrowellenmoduls (40, 42) so ausgestaltet sind, daß das zweite Mikrowellenmodul (42) sowohl direkt vom ersten Mikrowellenmodul (40) ausgestrahlte Mikrowellenstrahlung als auch innerhalb der Antennenkeule (44) des ersten Mikrowellenmoduls (40) reflektierte Mikrowellenstrahlung erfaßt,
- daß eine Steuervorrichtung (56) zur Auswertung des von dem zweiten Mikrowellenmodul (42) erzeugten Ausgangssignals vorgesehen ist.

9. Vorrichtung nach Anspruch 8, dadurch gekennzeichnet, daß sich die Antennekeulen (44, 46) der Antenne des ersten Mikrowellenmoduls (40) und und der Antenne des zweiten Mikrowellenmoduls (42) überschneiden.

10. Vorrichtung nach Anspruch 8 oder 9, dadurch gekennzeichnet, daß das erste Mikrowellenmodul (40) und das zweite Mikrowellenmodul (42) in einem Gehäuse oder in separaten Gehäusen angeordnet sind.

11. Vorrichtung nach einem der Ansprüche 8 bis 10, dadurch gekennzeichnet, daß ein Mischelement (52) zur Mischung der vom ersten Mikrowellenmodul (42) direkt empfangenen und der empfangenen reflektierten Mikrowellenstrahlung vorgesehen ist, wobei das Mischelement (52) zumindest ein Differenzsignal erzeugt.

12. Vorrichtung nach Anspruch 11, dadurch gekennzeichnet, daß die Steuervorrichtung (56) den phasenwinkelabhängigen Gleichsignalanteil des Mischsignals auswertet und dann ein Personennachweissignal erzeugt, wenn der Wert des Gleichsignalanteils entsprechend der Bewegung der Person variiert.

13. Vorrichtung nach Anspruch 11 oder 12, dadurch gekennzeichnet, daß die Steuervorrichtung (56) den Gleichsignalanteil des Mischsignals auswertet und dann ein Manipulationsnachweissignal erzeugt, wenn der Wert des Gleichsignalanteils außerhalb vorgegebener Wertegrenzen liegt.

14. Vorrichtung nach Anspruch 13, dadurch gekennzeichnet, daß als Wertegrenzen ein unterer Wert und/oder ein oberer Wert vorgegeben sind.

15. Vorrichtung nach einem der Ansprüche 8 bis 14, dadurch gekennzeichnet, daß das erste Mikrowellenmodul (40) die Mikrowelle mit einer Puls- oder Frequenzmodulation abstrahlt.

16. Vorrichtung nach Anspruch 15, dadurch gekennzeichnet, daß die moduliert abgestrahlte Mikrowelle Dateninformationen zwischen dem ersten Mikrowellenmodul (40) und dem zweiten Mikrowellenmodul (42) überträgt.

17. Vorrichtung nach einem der Ansprüche 8 bis 16, dadurch gekennzeichnet, daß sowohl das erste Mikrowellenmodul (40) als auch das zweite Mikrowellenmodul (42) jeweils als Sender und als Empfänger dienen und die Übertragung der Mikrowellenstrahlung in beiden Richtungen zwischen dem ersten Mikrowellenmodul (40) und dem zweiten Mikrowellenmodul (42) erfolgen kann.

18. Vorrichtung nach Anspruch 17, dadurch gekennzeichnet, daß die Übertragung der Mikrowellen zwischen dem ersten Mikrowellenmodul (40) und dem zweiten Mikrowellenmodul (42) alternierend, vorzugsweise automatisch alternierend erfolgt.

19. Vorrichtung nach einem der Ansprüche 11 bis 18, dadurch gekennzeichnet, daß die Steuervorrichtung (56) einen Prozessor aufweist, der die Perioden, vorzugsweise jede Periode des Differenzsignals bestimmt, die Differenz von zeitlich aufeinanderfolgenden Perioden des Differenzsignals bestimmt und die berechnete Differenz mit einem vorgegebenen Wert vergleicht.

20. Vorrichtung nach einem der Ansprüche 1 bis 19, dadurch gekennzeichnet, daß die Steuerung durch ein Schalten des Schaltmittels eine Geschwindigkeitsbegrenzung des Kraftfahrzeuges (22) aktiviert und/oder eine Zubehörhydraulik oder -mechanik blockiert.

21. Vorrichtung nach einem der Ansprüche 1 bis 20, dadurch gekennzeichnet, daß die Steuerung mindestens ein zweites Schaltmittel aufweist, das bei eingelegtem Rückwärtsgang schaltet.

22. Vorrichtung nach Anspruch 21, dadurch gekennzeichnet, daß die Steuerung durch ein Schalten des ersten Schaltmittels und des zweiten Schaltmittels einen Motorstop aktivert und/oder mindestens eine Bremse des Kraftfahrzeuges aktiviert und/oder das Getriebe des Kraftfahrzeuges in die Leerlaufstellung schaltet.

23. Verwendung eines Näherungssensors für eine Sicherung des Rückraumbereiches eines Kraftfahrzeuges,
- wobei der Näherungssensor ein Mikrowellenmodul, das mindestens eine Mikrowellen ausstrahlende und empfangende Antenne aufweist,
- ein den Nahbereich des Näherungssensors überwachendes Optomodul, das einen optische Strahlung aussendenden optischen Sender und einen reflektierte optische Strahlung empfangenden optischen Empfänger aufweist und
- eine Steuervorrichtung zur Auswertung des von dem Mikrowellenmodul erzeugten Ausgangssignals sowie des vom Optomodul erzeugten Ausgangssignals aufweist.

24. Verwendung eines Näherungssensors für eine Sicherung des Rückraumbereiches oder eines Seitenbereiches eines Kraftfahrzeuges,
- wobei der Näherungssensor ein erstes Mikrowellenmodul, das mindestens eine Mikrowellen ausstrahlende Antenne aufweist, und ein zweites Mikrowellenmodul aufweist, das mindestens eine Mikrowellen empfangende Antenne aufweist,
- wobei das erste Mikrowellenmodul und das zweite Mikrowellenmodul beabstandet voneinander angeordnet sind,
- wobei die Antennenkeulen der Antennen des ersten und des zweiten Mikrowellenmoduls so ausgestaltet ist, daß das zweite Mikrowellenmodul sowohl direkt vom ersten Mikrowellenmodul ausgestrahlte Mikrowellenstrahlung als auch innerhalb der Antennenkeule des ersten Mikrowellenmoduls reflektierte Mikrowellenstrahlung erfaßt, und
- wobei eine Steuervorrichtung zur Auswertung des von dem zweiten Mikrowellenmodul erzeugten Ausgangssignals vorgesehen ist.
